# EUROPEAN PATENT APPLICATION

(11) **EP 1 071 233 A2**
(43) Date of publication of application: **24.01.2001**
(21) Application number: 00113723.1
(22) Date of filing: 28.06.2000
(51) Int. Cl.: H04H 9/00

(54) **Communication prize contest system and terminal device used in it and communication market research system and terminal device used in it**

(30) Priority: 28.06.1999 JP 18100399
(71) Applicant: Forval Corporation, Tokyo (JP)
(72) Inventor: Hasegawa, Takashi, c/o Forval Corporation, Toyko (JP); Akiyama, Naotaka, c/o Forval Corporation, Toyko (JP)
(74) Representative: Strehl Schübel-Hopf & Partner

(57) **Abstract**

A communication prize contest system, which is an information communication system in which a part of a communication charge paid by a caller to an information communication network running company is paid to a receiver in an information communication network or the like, comprises a terminal device, a center device and the information communication network. The terminal device comprises at least a data input/output portion and a communication portion in which the terminal device is operated by an entrant who is the caller to connect the terminal device to the center device via the information communication network and enter a prize contest sponsored by a sponsor who is the receiver. The center device comprises at least a main control portion and a communication portion in which the center device determines on the spot whether the entrant wins a prize or not with respect to an entry from the terminal device and replies immediately the result of whether the entrant wins a prize or not via the information communication network to notify the entrant of the result.

## Description

### FIELD OF THE INVENTION

The present invention relates to a communication prize contest system where an entrant enters a prize contest using a communication line and a terminal device used in the system, and a communication market research system where an answerer answers a market research using a communication line and a terminal device used in the system.

### BACKGROUND OF THE INVENTION

A prize contest is opened for the purpose of PR (sales promotion) of a product or service, or for the purpose of a market research or the like. A prize contest is generally carried out in a state in which a sponsor of the prize contest publishes an advertisement recruiting for a prize contest in a newspaper, magazine, TV or the like. A reader or a viewership sees the advertisement and enters the prize contest by mails such as a postcard. Accordingly, high volumes of mails are delivered to the sponsor. The sponsor sorts entry mails relating to the prize contest from general mails by manual work. After a period of time of entry has finished, the sponsor draws lots from the entry mails to sort a prizewinner of the prize contest. Therefore, enormous effort is need to deal with the mails. When the sponsor draws lots from solvers answering a quiz correctly to determine a prizewinner, the sponsor must sorts the solvers answering a quiz correctly from the entry mails at much expense in time and effort in addition. Add to this, after the prize contest has finished, high volumes of mails, which became unnecessary, are left at the sponsor and the sponsor is troubled to deal with the mails. Moreover, a questionnaire is often carried out at the same time of the prize contest and enormous effort is need to input questionnaire data into a computer or the like.

On the other hand, an entrant entering the prize contest must have a postcard and a postage stamp and enter matters in accordance with an entry instruction and an addressee and the like. Accordingly, the entrant is also troubled greatly.

To solve the problem, (1) Japanese Patent Application No.3-3748 (Japanese Patent Laid-Open No.4-243360) discloses "METHOD FOR COLLECTION OF INFORMATION ABOUT ENTRY OF QUIZ, QUESTIONNAIRE OR THE LIKE WITH PRIZE CONTEST AND DEVICE THEREOF", in which a quiz, questionnaire or the like with a prize contest is carried out using a telephone line. A telephone and a processing circuit are configured to be able to communicate with each other via the telephone line and the telephone calls up the processing circuit via the telephone line to communicate with the processing circuit. The processing circuit asks the telephone a question by voice, receives an answer of the question from the telephone and replies to the answer to correct information and store the information in an exchangeable memory. A prizewinner of the prize contest is drawn and determined from all of entrants after a period of time of entry has finished.

(2) Japanese Patent Application No.3-168600 (Japanese Patent Laid-Open No.5-22437) discloses "PRIZE CONTEST ENTRY SYSTEM", in which an answer is input by a telephone. This prize contest entry system is generally performed as follows. A sponsor of a prize contest advertises the prize contest to provide an entry instruction and ask a question to a reader or a viewership via TV, a newspaper, magazine or the like. A central information processing unit provided with an exchange or the like receives a call made by an entrant of the prize contest with respect to the question. The central information processing unit collects a personal identification number, an answer to the question for the prize contest, an address and telephone number or the like of the entrant from the entrant. The collected data are registered in a database in the central information processing unit. After the registration has finished, the entrant (caller) is notified that an entry procedure has finished and the central information processing unit hangs up. The data of a call made by the entrant during a period of time of entry is stored in accordance with the above-described procedure. After a period of time of entry has finished, entrants answering a quiz correctly are sorted and a prizewinner is determined by operating and inputting of the sponsor.

Therefore, effort of the entrant and the sponsor of the prize contest is reduced. Especially, the effort of the sponsor is reduced sharply.

However, the entrant can not know whether the entrant wins a prize or not until a predetermined period of time has passed. Accordingly, this prize contest entry system does not meet needs of the entrant wanting to know soon the result of whether the entrant wins a prize or not. Moreover, after the sponsor knows whether the entrant wins a prize or not, the sponsor must make contact with the entrant and notify the entrant the result. It is often announced that who wins a prize by sending a prize. However, in this case, anyone who does not win a prize receives no notification forever. Therefore, the entrant who does not receive a prize often has doubts about procedure such as the sort or sending.

This problem can be solved by "LOTTERY DEVICE FOR ADVERTISEMENT" of Japanese Patent Application No.3-183534 (Japanese Patent Laid-Open No.5-1254), for example. The purpose of the lottery device for advertisement is to increase effectiveness of advertising by receiving attention of a tissue paper distributed for advertising. The lottery device for advertisement is constructed comprising distributed elements consisting of a plurality of tissue papers individually wrapped and a reply device replying to an inquiry about a number of a prizewinner via an information amount billing line. A different lottery number, prize information and a telephone number for inquiries of the number of the prizewinner are displayed on an outside of a package of the tissue paper or the like.

A prize contest according to this lottery device for advertisement is processed as follows. A different (unique) lottery number and an entry instruction are entered in the tissue papers to distribute to an indefinite number of people. A receiver of the tissue paper calls the reply device from a telephone via the information amount billing line (popularly called the dial Q2 of Nippon Telegraph and Telephone Corporation), for example. The receiver (entrant) can receive the number of the prizewinner with respect to the lottery number and information provided as required such as a procedure at winning the prize.

Therefore, the lottery device for advertisement has advantages that an entrant can immediately know whether the entrant wins a prize or not, a sponsor meets needs of the entrant and can save effort for notifying the entrant of whether the entrant wins a prize or not.

However, when a different lottery number is displayed on the outside of the package of the tissue papers and the number of the prizewinner is determined with respect to the lottery number, the entrant can enter only once every different lottery number. For example, in the case in which a different lottery number is displayed on the outside of the package of the tissue papers distributed in the street, one person does not receive so many tissue papers and receives some two tissue papers at best. Therefore, the number that the receiver of the tissue papers can call is not much. In the case in which a different lottery number is entered in a weekly magazine, one person does not buy more than one weekly magazine and the person enters only once.

Depending on the telephone company, a system is adopted where a part of a telephone charge of call to a program as a reward is given to those who provides the program promoting use of telephone for a telephone line. In the case in which the system is adopted and the prize contest is sponsored, when the number of calls of an entrant is limited, a sponsor who provides the program and sponsors a prize contest does not make a profit. Therefore, it is desired that a prize contest system where the entrant can know the result on the spot and enter the prize contest any number of times.

A market research is carried out by a means of communication from a conventional telephone on down, however, there is a problem that an obtained information value is inferior to one in the street in downtown. Therefore, it is desired to provide a market research system, which can carry out a market research obtaining superior information value via communication.

### THE DISCLOSURE OF THE INVENTION

The present inventors have concentrated their energy on studying in view of the problems and provide the present invention. More specifically, a first aspect of the present invention is a communication prize contest system, which is an information communication system in which a part of a communication charge paid by a caller to an information communication network running company is paid to a receiver in an information communication network and/or an information communication system in which an information transmitter who is the receiver can receive an information providing charge from an information receiver who is the caller in an information communication network, comprising a terminal device, a center device and the information communication network.

The terminal device comprises at least a data input/output portion and a communication portion in which the terminal device is operated by an entrant who is the caller to connect the terminal device to the center device via the information communication network and enter a prize contest sponsored by a sponsor who is the receiver.

The center device comprises at least a main control portion and a communication portion in which the center device determines on the spot whether the entrant wins a prize or not with respect to an entry from the terminal device and replies immediately the result of whether the entrant wins a prize or not via the information communication network to notify the entrant of the result.

A sponsor (including an information communication network running company itself) using the communications prize contest system of the present invention sponsors and runs a prize contest and an entry is accepted via an information communication network. The entry is carried out by transmitting information, which can be read by a computer, from a terminal device to a center device. In a state in which the terminal device and the center device are connected by the information communication network, i.e., an entrant is billed for a communication charge or the like, the center device determines whether the entrant wins a prize or not and sends the result back to the terminal device with holding billing information. In this way, the entrant knows whether the entrant wins a prize or not. Therefore, if the entrant wants to enter the prize contest again, the entrant breaks the connection between the terminal device and the center device temporarily and can enter the prize contest again. In the case in which an entry can be allowed without breaking the connection, the entrant can enters the prize contest again without doing anything else.

In this way, the center device determines on the spot whether the entrant wins a prize or not and notifies the entrant of the result. Therefore, a sponsor need not expend effort and money at least in notifying the entrant that the entrant wins a prize. Moreover, it is expected that the same person enters the prize contest repeatedly (i.e., use of the information communication network is increased). On the other hand, the entrant knows the result immediately, therefore, the sponsor meets needs of the entrant and in the case in which the entrant wants the prize of the prize contest absolutely, the entrant can enter the prize contest repeatedly. Moreover, the entrant can use the communication prize contest system in much the same way playing a game. The sponsor can receive a part of the communication charge paid by the entrant to an information communication network running company from the company, and an information providing charge from the entrant. The entrant enters the prize contest repeatedly, therefore, an amount paid by the information communication network running company to the sponsor and an amount, which can be received by the sponsor from the entrant as the information providing charge, are increased.

The meaning of the word of "immediately" in claims comprises a case in which whether the entrant wins a prize or not is determined on the spot and the entrant is notified of the result with holding a communication state. Moreover, the meaning comprises a case in which the entrant breaks the connection between the terminal device and the center device temporarily and the entrant is made to call again in a predetermined period of time to connect the terminal device to the center device to be notified of whether the entrant wins a prize or not during the second call. A receiver and a sponsor are not always the same person on "a prize contest sponsored by a sponsor who is said receiver". There is a case in which a receiver is subcontracted by a sponsor, acts as a proxy in carrying out a prize contest.

According to the communications prize contest system of the present invention, the terminal device or the center device generates a random number of predetermined number of digits and the entrant is determined to win a prize when the random number matches a predetermined number to promote repeated entries (a random number system). The entrant may be determined to win a prize when the random number does not match a predetermined number. A random number may be generated, for example, when a specific key for expressing an intention to enter the prize contest is input from the terminal device. A character or numeric value determined by roulette or a throttle machine is regarded as a random number.

The entrant may input an arbitrary mark instead of a random number from the terminal device and the entrant may be determined to win a prize when the arbitrary mark matches a predetermined mark (a mark system). According to the mark system, the entrant can directly participate in whether the entrant wins a prize or not. It Is preferable that the entrant is notified of a number of digits of the mark and characters, numbers and symbols available as a mark in advance. The random number system and the mark system can be used together.

Moreover, for example, the entrant is made to play rock, paper and scissors with the center device via the terminal device and it may be determined whether the entrant wins a prize or not. The center device asks a quiz on the spot to make the entrant answer to the quiz and it may be determined whether the entrant wins a prize or not. For example, the center device transmits game software to the terminal device to make the entrant to play a game and it may be determined whether the entrant wins a prize or not in accordance with the result of the game. The entrant is made to sing a song or the like and it may be determined whether the entrant wins a prize or not in accordance with the evaluation. In short, any method, which can determine whether the entrant wins a prize or not on the spot (holding the billing state), may be used and the system to determine whether the entrant wins a prize or not is not limited to a specific system.

The terminal device may determine whether the entrant wins a prize or not and transmit the result to the center device.

According to the communications prize contest system of the present invention, it is preferable that when the terminal device or the entrant is registered in the center device in advance, probability of wining a prize is increased.

As for a system for increasing probability of wining a prize, in the random number system, for example, two random numbers are generated every entry. When either of the two random numbers matches the predetermined number, the entrant is determined to win a prize so that probability of wining a prize can be increased. In the case in which it is determined whether the entrant wins a prize or not in accordance with the result of the game, the borderline of the game is decreased so that probability of wining a prize can be increased. The system for increasing probability of wining a prize is not limited to these and various systems can be adopted.

In this connection, when the data of the terminal device or the entrant is registered and stored, at the entry of the prize contest, inputting data by the entrant from the terminal device can be omitted.

According to the communications prize contest system of the present invention, it is preferable that the prize contest is carried out through a medium of a commodity transmitted at cost or no cost or a medium of electronic information existing on the information communication network and provided at cost or no cost.

The commodity refers to various commodities such as a magazine, a drink, a direct mail, an automobile or a tissue paper, and it is not interpreted in a limited state. In addition to the commodity, a prize contest carried out through a medium of real estate such as land and buildings is included within the scope of the present invention. Moreover, a prize contest carried out through a medium of service is included within the scope of the present invention. The entry instruction of the prize contest is entered in these commodities, or a person whom the commodity is transmitted to and the service is provided for is notified of the entry instruction. The electronic information may be a home page on the Internet. Except for the commodities listed above, a prize contest carried out through a medium of TV, a radio broadcast, a broadcast in the street of a neighborhood association, an advertising signboard or the like is included within the scope of the present invention.

According to the communications prize contest system of the present invention, It is preferable that only a person who has input a specified password can enter a prize contest and the password is entered in a commodity transmitted at cost or no cost or published in electronic information existing on the information communication network and distributed at cost or no cost. As described above, the meaning of the commodity is not interpreted in narrow limits. Moreover, the case in which the password is distributed via TV, a radio broadcast, a broadcast of a neighborhood association in the street, an advertising signboard or the like is included within the scope of the present invention. In addition, the case in which the password is distributed by announcing by word of mouth is included within the scope of the present invention.

The password is distributed, therefore, for example, it is precluded that a person who does not buy the commodity targeted for the prize contest and a person who is not provided with the service targeted for the prize contest enter the prize contest. As a result, the sales of the commodity are promoted and the provision of the service is promoted.

According to the communications prize contest system of the present invention, it is preferable that the center device has a database in which prize contest information relating to the prize contest, which can be entered at least at present, is stored and the center device replies information in accordance with an inquiry from a person planning on entering a prize contest via the terminal device among the prize contest information to the terminal device.

Some people enter a prize contest as a hobby and the construction of the present invention meets their needs. As for the sponsor, entries are promoted. Moreover, the connect time of the terminal device to the center device is increased and the sponsor can make a profit.

It is preferable that the terminal device of the communications prize contest system of the present invention is a cellular phone or a personal handyphone system, which is potable.

The present invention provides a terminal device used in the communications prize contest system.

It is preferable that the terminal device can display textual information thereon and search the database of the center device.

A second aspect of the present invention is a communication market research system, which is an information communication system in which a part of a communication charge paid by a caller to an information communication network running company is paid to a receiver in an information communication network and/or in an information communication system in which an information transmitter who is a receiver can receive an information providing charge from an information receiver who is a caller in an information communication network, comprising a terminal device, a center device and an information communication network.

The terminal device comprises at least a data input/output portion and a communication portion in which the terminal device is operated by an answerer who is the caller to connect the terminal device to the center device via the information communication network and answer a market research carried out by a sponsor who is the receiver.

The center device comprises at least a main control portion and a communication portion in which the center device records an answer to the market research from the terminal device and provides the answerer with a predetermined amount of an electronified value in accordance with contents of the market research.

A sponsor (including an information communication network running company itself) carried out the market research. The answerer answers the market research. A question for the market research is preferably transmitted from the center device to the terminal device in accordance with an operation of the answerer. The answerer may be notified of contents of the question in advance by a magazine, a direct mail or the like. The answerer answers to the market research by transmitting information, which can be read by computer, from the terminal device to the center device.

The electronified value is provided for increasing an incentive of the answerer. An object of that is to derive the more accurate and detailed answer from the answerer in order to improve reliability of the market research. To increase an incentive by the electronified value does not need time and effort for packing and sending while a conventional small gift need these. The concept of the electronified value includes so-called electric cash.

According to the second aspect of the present invention, as with the first aspect, the sponsor can receive a part of the communication charge paid by the entrant to an information communication network running company from the company, and an information providing charge from the entrant. The answerer is made to communicate bearing the cost and the sponsor collects the information providing charge from the entrant for ensuring will of the answerer with respect to the market research. More specifically, when the answerer answers the market research even if the answerer bears the cost such as the communication charge, it is ensured that high will of the answerer to answers the market research. Therefore, data with high reliability can be extracted.

A receiver and a sponsor are not always the same person on "a market research carried out by a sponsor who is said receiver" in the claims. There is a case in which a receiver is subcontracted by a sponsor and acts as a proxy in carrying out a market research.

Moreover, in the communication market research system of the present invention, it is preferable that business transaction can be conducted by the electronified value.

The business transaction is, for example, shopping at a convenience store, purchase of a negotiable instrument, use of sports facilities or the like.

Moreover, in the communication market research system of the present invention, it is preferable that only when the terminal device or the answerer is registered in the center device in advance, an answer to the market research is accepted or the answerer is provided with an electronified value.

Therefore, the market research can be carried out with high reliability. Moreover, age, sex and the like of an owner of the terminal device (answerer) are registered in the center device in advance and the answer is accepted in accordance with the information thereof so that the market research is carried out with limiting the target.

The terminal device of the communication market research system of the present invention transmits information unique to the terminal device at connected to the center device. The center device receives the transmitted information unique to the terminal device. At least information relating to the market research, which can be answered at present, and information relating to the owner of the terminal device is stored as database in the center device. The owner of the terminal device is determined according to the received information unique to the terminal device and the information relating to the owner of the terminal device. Information in accordance with the determined owner of the terminal device is selected from the information relating to the market research, which can be answered at present, to transmit to the terminal device.

Therefore, the information relating to the market research, which can be answered at present, in accordance with the owner of the terminal device is transmitted to the terminal device and the caller has no difficulty in selecting information and access quickly to information required. Moreover, to the sponsor of the market research, the number of the answerers is increased. The information relating to the market research, which can be answered at present, is condition required of an answerer for example, sex, age, occupation, and the like. The information relating to the owner of the terminal device is for example, a name, age, sex and the like.

There is a case in which anyone other than the owner of the terminal device calls and the terminal device is connected to the center device. Therefore, it is preferable that information relating to anyone other than the owner of the terminal device (a name, age, sex, occupation, and the like) is stored in the center device and when the terminal device is connected to the center device, the terminal device is required by the center device to input information where the caller oneself can be identified with the information to determine the caller. Accordingly, information in accordance with the determined caller can be selected from information relating to the market research, which can be answered at present.

It is preferable that the terminal device used in the communication market research system of the present invention is a cellular phone or a personal handyphone system, which is potable.

A cellular phone or a personal handyphone system is usually used by the owner thereof exclusively, therefore, reliability of the market research is improved.

### BRIEF DESCRIPTION OF THE DRAWINGS

Fig. 1 is a view showing an example of system configuration of a communication prize contest system according to a first aspect of the present invention.
Fig.2 is a block diagram showing an example of a cellular phone as a terminal device in Fig. 1.
Fig.3 is a view showing an example of a screen display of the cellular phone as a terminal device of the communication prize contest system according to a first aspect of the present invention.
Fig. 4 is a flowchart showing an example of a series of flows of an entry into a prize contest in the communication prize contest system according to a first aspect of the present invention.
Fig. 5 is a view showing an example of a screen display of the cellular phone as a terminal device of a communication market research system according to a second aspect of the present invention.
Fig. 6 is a block diagram showing an example of flows of an electronified value in a communication market research system according to a second aspect of the present invention.

### DESCLOSURE OF THE BEST EMBODIMENTS

An embodiment of a communication prize contest system according to a first aspect of the present invention and a terminal device used in it will now be described in detail by referring to drawings.

### The first embodiment of the present invention

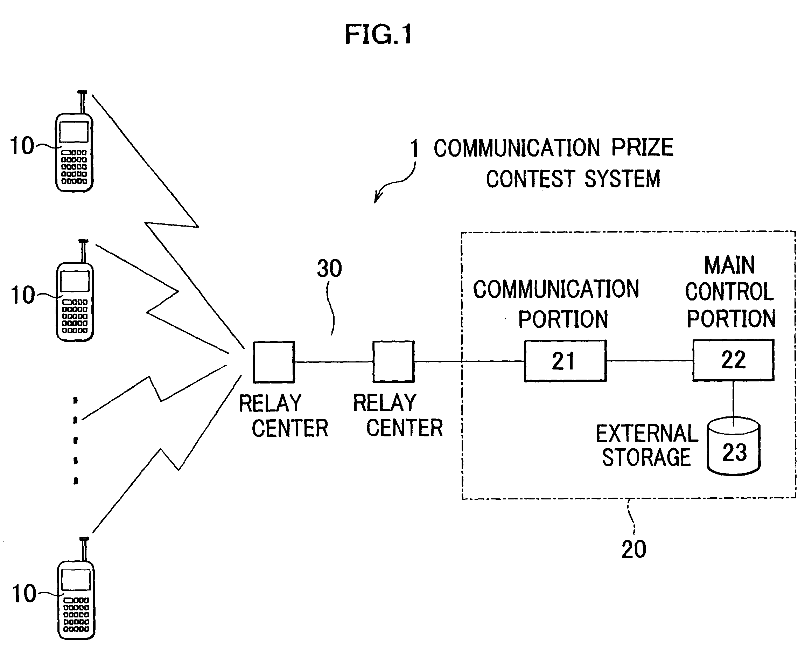

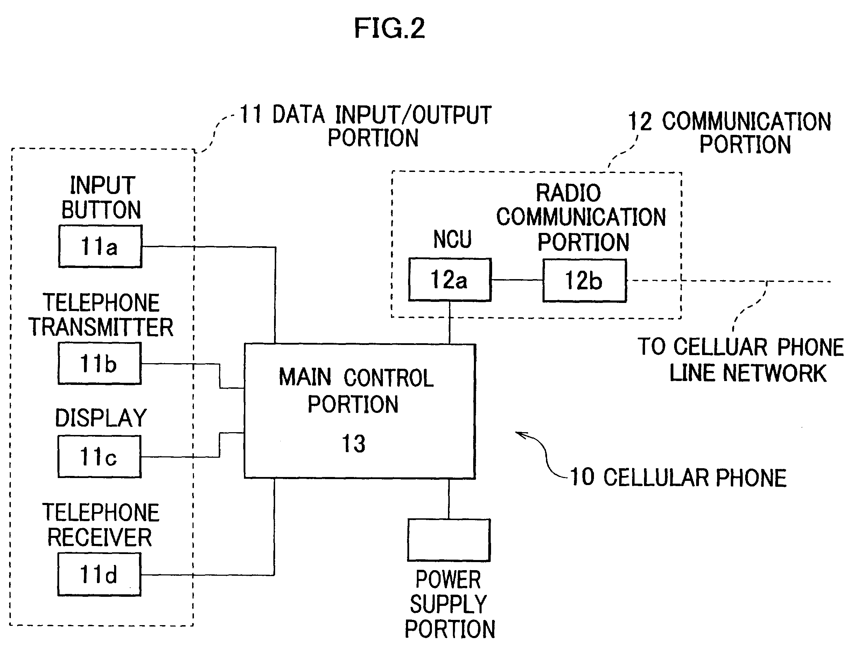

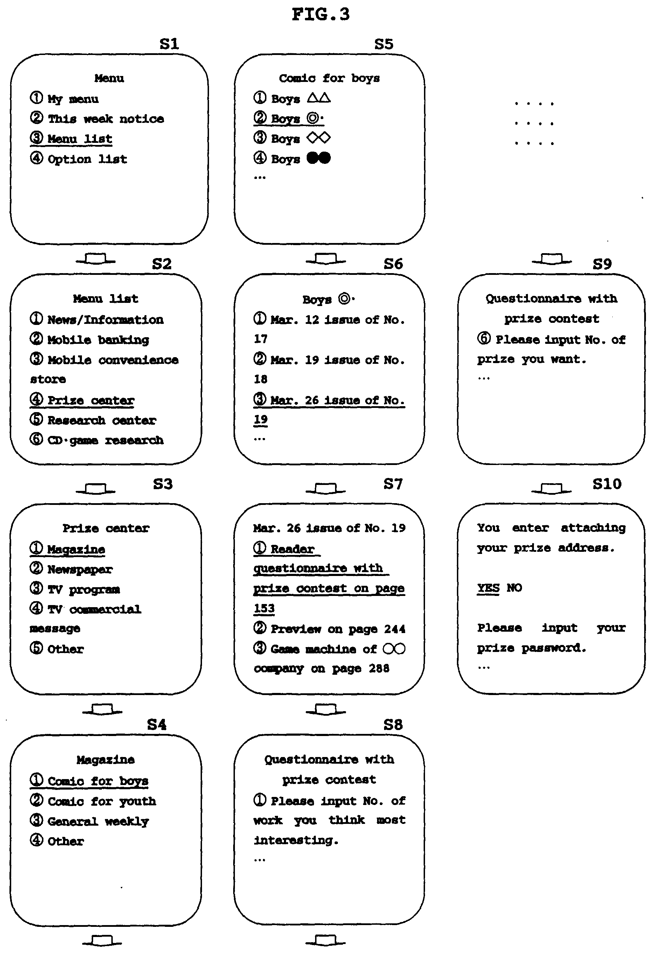

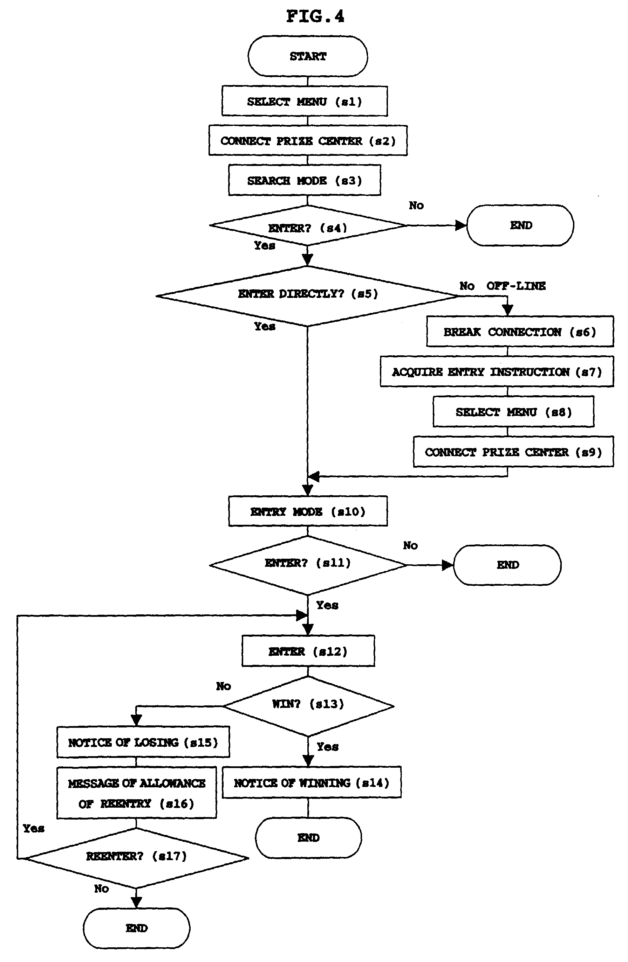

Fig. 1 is a view showing an example of system configuration of a communication prize contest system. Fig.2 is a block diagram showing an example of a cellular phone as a terminal device. Fig.3 is a view showing an example of a screen display of the cellular phone as a terminal device. Fig. 4 is a flowchart showing an example of a series of flows of an entry into a prize contest.

In the present embodiment, the communication prize contest system according to a first aspect of the present invention is predicated on that the system is an information communication system in which a part of a communication charge paid by a caller to an information communication network running company is paid to a receiver in an information communication network, and/or an information communication system in which an information transmitter who is a receiver can receive an information providing charge from an information receiver who is a caller in an information communication network. In the former information communication system, for example, a cellular phone company or the like collects a telephone charge at data communication by no voice from a caller who makes a call, and pays a part of the telephone charge as a reward to a receiver who takes the call. The latter information communication system is, for example, the so-called dial Q2 of Nippon Telegraph and Telephone Corporation or the like and a caller pays a telephone charge to a telephone company and pays an information providing charge (fixed costs, usage-based rates or combination of these) to an information provider (receiver).

### System configuration

The communication prize contest system 1 of the present embodiment, as shown in Fig. 1, comprises a terminal device 10, a center device 20 and an information communication network 30.

### (1) Terminal device

In the present embodiment, the terminal device 10 is a cellular phone (including the so-called personal handyphone system) and there are a lot of the cellular phones 10. It is preferable that a person who plans on entering a prize contest (entrant) owns the cellular phone 10. The cellular phone 10 comprises a data input/output portion 11, a communication portion 12 and a main control portion 13. The terminal device 10 is not limited to the cellular phones 10 and includes a personal computer, personal word processor, game machine and the like, which has communication facility.

The cellular phone 10 comprises an input button 11a (dial key or function key), a telephone transmitter 11b, a display 11c and a telephone receiver 11d as a data input/output portion 11. In addition, the cellular phone 10 may comprise a jog dial and a touch panel as means for inputting data. The input button 11a inputs data required by the center device 20 for meeting an entry condition of a prize contest. It is preferable that textual information can be displayed on the display 11c.

It is preferable that when information relating to a prize contest, which can be entered, and a prize contest entering history of an entrant converted into a database in the center device 20 can be searched from the outside, search software is introduced to the cellular phone 10 so that the database can be searched by the input button 11a (including a jog dial). As a consequence, entrants are increased. The cellular phone, which can do information search, is already known.

In the present embodiment, the communication portion 12 comprises an NCU (net control unit) 12a for data communication and can carry out data communication except for voice communication. Moreover, the communication portion 12 comprises a radio communication portion 12b for carrying out radio communication.

The main control portion 13 has control over the data input/output portion 11 and the communication portion 12.

### (2) Center device

Next, in the present embodiment, the center device 20 comprises a communication portion 21, a main control portion 22 and an external storage 23. The center device 20 is operated by a sponsor of a prize contest (including a person subcontracted by a sponsor to carry out the prize contest). The center device 20 determines on the spot whether an entrant of a prize contest wins a prize or not and notifies the entrant of the result. It is preferable that the communication portion 21 can receive data expect for voice transmitted from the cellular phone 10 and transmit data expect for voice to the cellular phone 10. For example, the communication portion 21 can transmit and receive character data or the like as to communicate with the entrant closely.

The main control portion 22 has control over the center device 20 from the communication portion 21 down on. The main control portion 22 generates a random number, determines whether an entrant wins a prize or not or the like (the cellular phone 10 may generate a random number). When only an entrant who has input a specified password (constructed of numbers, marks and the like) can enter a prize contest, the main control portion 22 requires an entrant to input (including voice input) the password and determines whether the password input is proper or not.

The external storage 23 is connected to the main control portion 22 in which various data can be stored. Data to be stored, for example, includes information relating to a prize contest (a period of time of opening, number data of prizewinners, a total number of prizewinners, kinds of prizes and the like), information relating to the owner of the cellular phone 10, history of an entrant, information relating to a prize contest, which can be entered, and the like.

The information relating to a prize contest is, for example, information, which is needed by a sponsor at sponsoring a prize contest, such as number data of prizewinners for determining whether an entrant wins a prize or not at the center device 20, a total number of prizewinners, kinds and number of prizes and the like. The information relating to the owner of the cellular phone 10 may be, for example, data, which can be read by a computer, converted from matters to be entered in an entry sheet at the time of purchase of the cellular phone 10 at a store. The information relating to a prize contest, which can be entered, is, for example, "if you buy ○○ drink, will be awarded to 500-person by lot", "a prize contest in which a product of ⓞ ∇ company will be awarded to 200-person is opening at ⓞ magazine", "a prize contest in which a personal computer will be awarded is opening at the home page of Δⓞ company" or the like. The information is preferably searched from the cellular phone 10 by the main control portion 22 as a search engine. Therefore, required information is easy to access and the number of entrants can be increased.

When the center device 20 determines whether an entrant wins a prize or not (draws lots), transmits immediately the result to the cellular phone 10. The meaning of the word of "immediately" comprises a case without breaking a call made by an entrant as well as a case in which a call made by an entrant is cut off temporarily and the entrant is made to call again in a predetermined period of time, and the word does not only mean length of time. However, a preferred embodiment is the former (the case without breaking a call made by an entrant).

### (3) Information communication network

The information communication network 30 is a cellular phone line network 30 run by a cellular phone company in the present invention. The cellular phone 10 is connected to the center device 20 by the cellular phone line network 30.

In the present invention, a part of a telephone charge paid by an entrant (caller) to the cellular phone company is paid to a sponsor (receiver).

### Descriptions of operation

Next, an example of operation In the communication prize contest system 1 of the present embodiment will be described with referring to Fig. 3. The configuration of the communication prize contest system 1 has been described with referring to Fig. 1 or the like. The center device 20 converts the information relating to a prize contest, which can be entered, into a database and has the database and the database can be searched from the outside. The cellular phone 10 can search the information relating to a prize contest, which can be entered, stored in the center device 20 by operating the Input button 11a of the cellular phone 10. The cellular phone 10 is registered in the center device 20. Moreover, the cellular phone 10 can display textual information on the display 11c.

### (1) Acquisition of the information relating to a prize contest, which can be entered

There is a case in which an owner of the cellular phone 10 plans on entering a prize contest, however, the owner does not know what kind of prize contest is present and how to enter a prize contest.

In this case, first, the owner of the cellular phone 10 (i.e., a person who plans on entering a prize contest) turns on the power of the cellular phone 10. "Menu" is displayed on the display 11c (S1). The owner of the cellular phone 10 selects "③" Menu list". "Menu list" is displayed on the display 11c (S2). At selection from the menu, the input button 11a is used. When the cellular phone 10 has a jog dial, selection from the menu can be carried out by the jog dial.

Next, the owner of the cellular phone 10 plans on entering a prize contest, therefore, selects "④" Prize center" from "Menu list" displayed on the display 11c. The prize center is run by a sponsor of the prize contest and the center device 20 is provided in the prize center. The owner selects the prize center from the menu list so that the cellular phone 10 calls automatically and connects to the prize center (i.e., the center device 20). The prize center may be run by the cellular phone company itself or other. The caller pays a communication charge to the cellular phone company and the communication charge can be interpreted as an information providing charge.

When the cellular phone 10 connects to the prize center, a list of categories to be media of the prize contest such as "① Magazine", "② Newspaper", "③ TV program" and the like are displayed on the display 11c, and the cellular phone 10 is put into search mode (S3). In search mode, the information relating to a prize contest, which can be entered, stored in the center device 20 and converted into a database in order to be searched from the outside can be searched by the cellular phone 10. Assuming that "① Magazine" is selected, sub categories such as "① Comic for boys", "② Comic for youth", "③ General weekly" and the like are displayed on the display 11c (S4). A tree search can be made for the information relating to a prize contest, which can be entered. The information may be searched by a keyword.

The owner of the cellular phone 10 selects "① Comic for boys", "② Boys ⓞ·" and "③ Mar. 26 issue of No. 19" one after another in accordance with preference of the owner from menus (S4-S6). Concrete names of prize contests such as "① Reader questionnaire with prize contest on page 153", "② Preview on page 244", "③ Game machine of ○○ company on page 288" and the like are displayed on the display 11c (S7).

Therefore, the owner of the cellular phone 10 (i.e., a person who plans on entering a prize contest) can acquire the information relating to a prize contest, which can be entered.

### (2) Entry into a prize contest

A person who plans on entering a prize contest (i.e., an entrant) purchases the Mar. 26 issue of No. 19 of Boys ⓞ·, for example, at a bookstore on the basis of the information acquired as described above after the connection is broken. The entrant sees an entry instruction for entering the prize contest on the Boys ⓞ· and calls the center device 20 from the cellular phone 10 to connect to the prize center in order to enter the prize contest.

In a case in which a prize contest can directly be entered in search mode, when the entrant selects, for example, "① Reader questionnaire with prize contest on page 153" in S7, the cellular phone 10 is put into entry mode from search mode (S8). In this case, the cellular phone 10 is put into entry mode holding connection between the cellular phone 10 and the center device 20.

In entry mode, for example, the center device 20 asks a questionnaire such as "Questionnaire with prize contest ① Please input No. of work you think most interesting." and the like (S8). The entrant answers the questionnaire by carried out two-way communication. After the questionnaire has finished, when there is a plurality of prizes, the center device 20 transmits data relating to a list of the prizes with a message of "⑥ Please input No. of prize you want."(S9) and the data and the message are displayed on the display 11c (not shown). The entrant selects No. of a preferred prize by the input button 11a. The list of the prizes may be displayed in search mode.

After the entrant selects No. of a preferred prize by the input button 11a, a message of "You enter attaching your prize address. YES NO" is displayed on the display 11c (S10). The message is displayed when the cellular phone 10 is registered in the center device 20. The main control portion 22 determines whether the cellular phone 10 is registered in the center device 20 on the basis of data relating to an identification number unique to the cellular phone 10 transmitted from the cellular phone 10 connected to the center device 20 and information relating to the owner of the cellular phone 10 stored in the external storage 23. When the cellular phone 10 is registered in the center device 20, the center device 20 transmits the message in S10 to the cellular phone 10.

When the entrant selects YES by the input button 11a, a message of "Please input your prize password." is displayed on the display 11c and the cellular phone 10 is put into input waiting mode (S10). The entrant inputs a predetermined prize password to transmit to the center device 20. Therefore, the center device 20 (the main control portion 22) can determine whether the entrant matches with the owner of the cellular phone 10 or not so that damage caused by impersonating is pretended. The prize password is stored in the external storage 23 of the center device 20.

When the prize password is valid, the entry is accepted and the entrant need not input information for identifying an individual (such as a user name) by the input button 11a. The information has been stored in the external storage 23 of the center device 20. Therefore, some of the load is taken off the entrant. When the prize password is not valid, the entrant is required to input again and, in some cases, the call is broken to prevent abuse of the cellular phone 10.

When the cellular phone 10 is not registered in the center device 20, the entrant inputs information required by the center device 20 for identifying an entrant oneself (such as a user name, an ID number) by the input button ha and transmits it to the center device 20. After the information required by the center device 20 for identifying an individual has been input and the individual has been identified, the center device 20 accepts the entry into the prize contest.

Inputting the prize password for identifying or the like may be carried out in search mode or may be omitted.

In addition to inputting of the prize password when the center device 20 requires the entrant to input another password, the entrant inputs the password. The password is, for example, notified the entrant for promoting the sales of a commodity and provision of service when the entrant purchases a specific commodity or receives specific service. It is preferable that when the password is required, the password is not input and the entry is not accepted.

### (3) Determination whether the entrant wins a prize or not

The center device 20 determines on the spot whether the entrant wins a prize or not when the entry is accepted. It may be determined that the entrant wins, for example, in the case in which the main control portion 22 generates a random number upon acceptance of the entry, when the random number matches a predetermined number registered in the external storage 23. The random number may be generated at the cellular phone 10 and transmitted to the center device 20.

It may be determined that the entrant wins in the case in which the entrant inputs an arbitrary mark of a predetermined number of digits by the input button 11a and transmits it to the center device 20, when the mark matches a predetermined mark. It may be determined that the entrant wins when the mark does not match a predetermined mark.

Moreover, it may be determined that the entrant wins when the center device 20 asks a question and the entrant can answer it. The center device 20 transmits game software to the cellular phone 10 to make the entrant play a game and it may be determined whether the entrant wins a prize or not in accordance with the result of the game. Any system in which the entrant knows the result immediately can be adopted.

At determination whether the entrant wins a prize or not, probability of wining a prize is increased on an entry of an entrant who inputs a prize password, i.e., an entry from the cellular phone 10 registered in the center device 20.

When it is determined whether the entrant wins a prize or not, the center device 20 transmits the result to the cellular phone 10 and notified the entrant of the result. The result is displayed on the display 11c of the cellular phone 10 and the entrant can know whether the entrant wins a prize or not. The center device 20 may notify the entrant by voice. For example, a speech signal synthesis circuit is provided in the center device 20 and a speech signal synthesized is transmitted to the cellular phone 10 to sound from the telephone receiver 11d.

After the center device 20 notifies the entrant whether the entrant wins a prize or not, the center device 20 notifies the entrant of the followings as required.
① The entrant who wins a prize is notified of explanation of a delivery method of the prize.
② The entrant who dose not win a prize is notified of explanation of that the entrant can enter the prize contest again. The entrant who wins a prize may be notified of this explanation.

A prize contest finishes when a predetermined number of prize run out. In a case in which an entry period of time of a prize contest is set In advance, a prize contest may finish when the entry period of time has finished.

### Explanation of a series of flows

A series of flows in the communication prize contest system 1 of the present embodiment will be described referring to Fig. 4.

First, the owner of the cellular phone 10 (i.e., a person who plans on entering a prize contest, or an entrant) selects a menu item from a menu of the cellular phone 10 (s1) and connects to the prize center (s2). Next, in search mode, the owner searches information relating to a prize contest, which can be entered (s3). When there is not a prize contest, which the owner wants to enter, the owner does not enter (s4). When there is a prize contest, which the owner wants to enter and can enter directly (s5), the cellular phone 10 is put into entry mode (s10).

When there is a prize contest, which the owner wants to enter and can not enter directly (s5), the owner breaks the connection with the prize center (the owner may holds the connection) and acquires an entry instruction (s6, s7). The case in which the owner can not enter directly includes a case in which a password for entering is attached to a commodity and the owner must purchase the commodity when the owner enters the prize contest.

A person who plans on entering a prize contest and has acquired an entry instruction selects a menu item from a menu of the cellular phone 10 (s8) and connects to the prize center (s9). The cellular phone 10 is put into entry mode (s10). When the person who plans on entering a prize contest knows the entry instruction in advance without using search mode, the cellular phone 10 may be put into entry mode from the start.

In entry mode (s10), as required, the person inputs an answer to various questionnaires, personal data, a password or the like. An intention to enter the prize contest is checked (s11). In a case in which the person does not intend to enter, the flows finish.

In a case in which the person intends to enter, the entry is accepted (s12) and it is determined on the spot whether the entrant wins a prize or not by the above-described system (s13).

After it has been determined whether the entrant wins a prize or not, the center device 20 transmits the result to the cellular phone 10 and notifies the entrant of the result. The entrant who wins a prize is notified that the entrant wins a prize (s14). The entrant who does not win a prize is notified that the entrant does not win a prize (s15). After the entrant is notified that the entrant does not win a prize, a message, which tells the entrant can enter again, is transmitted to the entrant as required (s16). An intention to enter the prize contest again is checked (s17). In a case in which the person does not intend to enter again, the flows finish. In a case in which the person intends to enter, the entry is accepted (s12). The entrant may enter again after the connection between the cellular phone 10 and the center device 20 is broken temporarily. The entrant who wins a prize may be allowed to enter again.

The above-described communication prize contest system 1 of the first aspect of the present invention is not limited to the above-described embodiment and can be changed and carried out as appropriate in the scope in which the object of the present invention is attained and the effect of the present invention is produced.

As for the communication terminal, a cellular phone and a personal handyphone system is excellent from the viewpoint of mobility, however, the communication terminal is not limited to a cellular phone and a personal handyphone system. The information communication system includes the Internet, a communication system, which is run by a corporation for using in-house, a communication system, which is run by a municipality independently, and the like. The information communication system in which the sponsor can receive an information providing charge includes a home page on the Internet at cost.

An embodiment of a communication market research system according to a second aspect of the present invention and a terminal device used in it will now be described in detail by referring to drawings.

### The second embodiment of the present invention

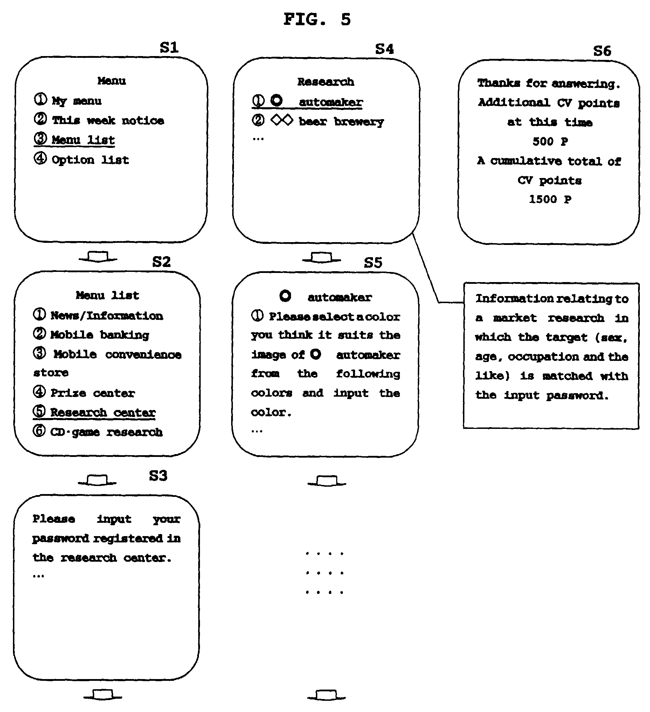

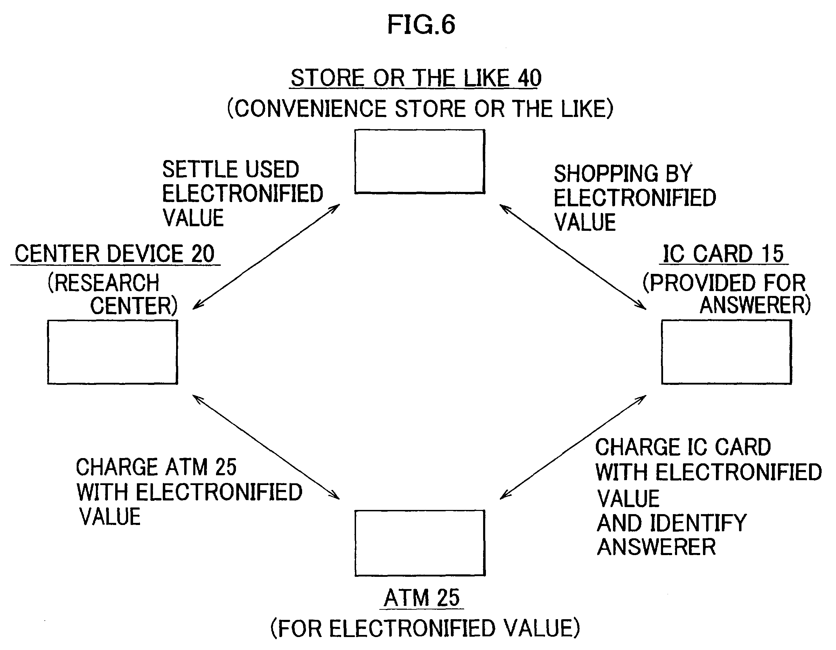

Fig. 5 shows an example of a screen display of the cellular phone as a terminal device. Fig. 6 is a block diagram showing an example of flows of an electronified value.

In the present embodiment, as with the communication prize contest system according to a first aspect of the present invention, the communication market research system according to a second aspect of the present invention is predicated on that the system is an information communication system in which a part of a communication charge paid by a caller to an information communication network running company is paid to a receiver in an information communication network, and/or an information communication system in which an information transmitter who is a receiver can receive an information providing charge from an information receiver who is a caller in an information communication network.

### System configuration

The communication market research system in the embodiment according to a second aspect of the present invention is much the same as the above-described communication prize contest system 1 according to a first aspect of the embodiment and comprises a terminal device 10, a center device 20 and an information communication network 30 (see Fig. 1).

### (1) Terminal device

In the present embodiment, the terminal device 10 is a cellular phone (including the so-called personal handyphone system) and there are a lot of the cellular phones 10. It is preferable that a person who plans on answering a market research owns the cellular phone 10 from the viewpoint of security and improving reliability of the market research. The cellular phone 10 comprises a data input/output portion 11, a communication portion 12 and a main control portion 13. The terminal device 10 is not limited to the cellular phones 10.

The cellular phones 10 can be the same cellular phones 10 described in a first aspect. An answer to a question of the market research is carried out by an input button 11a.

It is preferable that when information relating to a market research, which can be answered, converted into a database in the center device 20 can be searched from the outside, search software is introduced to the cellular phone 10 so that the database can be searched by the input button 11a (including a jog dial). As a consequence, it is easy to access to information needed and the number of answerers is increased.

In the present embodiment, the communication portion 12 comprises an NCU (net control unit) 12a for data communication and can carry out data communication except for voice communication. Moreover, the communication portion 12 comprises a radio communication portion 12b for carrying out radio communication.

The main control portion 13 has control over the data input/output portion 11 and the communication portion 12.

### (2) Center device

Next, in the present embodiment, the center device 20 comprises a communication portion 21, a main control portion 22 and an external storage 23. The center device 20 is operated by a sponsor of a market research (including a person subcontracted by a sponsor to carry out the market research). The center device 20 transmits a question for the market research to the cellular phone 10 as required and receives an answer to the market research from the cellular phone 10 to store in the external storage 23.

After the center device 20 has accepted the answer, the center device 20 provides the answerer with a predetermined amount of an electronified value. As for the electronified value, ① a network type such as "eCash" (eCash Technologies, Inc. of Holland) and ② an IC card type such as "Mondex Electric Cash" (National West Minster Bank of England) and "SVC (Stored Value Card)" are known. SVC is a so-called closed type and "Visa Cash" (Visa International) may be a representative example of SVC.

The electronified value is provided for the answerer as a reward for the answer to the market research. In the case in which the reward has value, an incentive of the answerer to answer the market research is increased (i.e., reliability of the result of the market research is improved). Therefore, it is preferable that various business transactions can be conducted by the electronified value. Providing and Using of the electronified value is described later.

It is preferable that the communication portion 21 can receive data expect for voice transmitted from the cellular phone 10 and transmit data expect for voice to the cellular phone 10. For example, the communication portion 21 can transmit and receive character data so that the communication portion 21 can communicate with the answerer closely and an accurate answer derived.

The main control portion 22 has control over the center device 20 from the communication portion 21 down on.

The external storage 23 is connected to the main control portion 22 in which various data can be stored. Data to be stored, for example, includes information relating to a market research (a category of the market research, the number to be admitted, a period of time of opening, a target age group, a target sex, a target occupation, an amount of an electronified value and the like), information relating to the owner of the cellular phone 10, answer history of an answerer (including a cumulative total of the electronified value, information relating to a market research, which can be answered, and the like.

The information relating to a market research and the information relating to the owner of the cellular phone 10 is put to use mainly as inside information of the sponsor.

The information relating to the owner of the cellular phone 10 may be, for example, data, which can be read by a computer, converted from matters to be entered (mane, age, sex and the like) in an entry sheet at the time of purchase of the cellular phone 10 at a store. When an answer from anyone other than the owner of the cellular phone 10 is accepted, information relating to this answerer (a name, age, sex and the like) need be stored from the viewpoint of improving security and reliability of the market research.

According to the information relating to the owner of the cellular phone 10 (information relating to the answerer) and the information relating to a market research, for example, when the age of the owner of the cellular phone 10 is not in the target age group required in the market research, the answer may not accepted.

The information relating to a market research, which can be answered, includes, for example, "Questionnaire of ⓞ automaker : the target age is ···, the target sex is ···, (and the like)", "Questionnaire of ◇◇ beer brewery : the target age is ···, (and the like)" and the like. It is preferable that this information can be searched by the cellular phone 10 using the main control portion 22 as a search engine. In this case, the required information is easy to access and the number of answerers is increased.

It is preferable that the main control portion 22 determines whether the cellular phone 10 is registered in the center device 20 or not according to data relating to an identification number unique to the cellular phone 10 transmitted from the cellular phone 10 connected to the center device 20 where the data is received by the communication portion 21 and the information relating to the owner of the cellular phone 10 stored in the external storage 23. In this case, when the cellular phone 10 calls the center device 20, the information relating to the owner of the cellular phone 10 (a name, age, sex, occupation and the like) is checked against the information relating to a market research and the center device 20 may select information relating to a market research suitable for the owner of the cellular phone 10 and transmit the information to the cellular phone 10. As a consequence, the owner of the cellular phone 10 (caller) can access the required information quickly.

There are a case in which a caller does not match an owner of the cellular phone 10 and a case in which any cellular phone other than the cellular phone 10 registered calls. Therefore, the center device 20 may be structured to require an user name and a password of the caller and transmit information relating to a market research, which is suitable for the caller and can be answered, to the cellular phone 10 based on the user name and the password.

### (3) Information communication network

Information communication network 30 is a cellular phone line network 30 run by a cellular phone company in the present invention. The cellular phone 10 is connected to the center device 20 by the cellular phone line network 30.

In the present invention, a part of a telephone charge paid by an answerer (caller) to the cellular phone company is paid to a sponsor (receiver).

### Descriptions of operation

Next, an example of operation in the communication market research system of the present embodiment will be described with referring to Fig. 5 and 6. The configuration of the communication market research system has been described with referring to Fig. 1 or the like. The cellular phone 10 can display textual information on the display 11c.

### (1) Answer to market research

There is a case in which an owner of the cellular phone 10 plans on answering a market research, however, the owner does not know what kind of market research is present and how to participate in (answer) a market research.

In this case, first, the owner of the cellular phone 10 (i.e., a person who plans on participating a market research) turns on the power of the cellular phone 10. "Menu" is displayed on the display 11c (S1). The owner of the cellular phone 10 selects "③ Menu list". "Menu list" is displayed on the display 11c (S2). At selection from the menu, the input button 11a is used. When the cellular phone 10 has a jog dial, selection from the menu can be carried out by the jog dial.

Next, the owner of the cellular phone 10 plans on answering a market research, therefore, selects "⑤ Research center" from "Menu list" displayed on the display 11c. The prize center is run by a sponsor of the market research and the center device 20 is provided in the research center. The owner selects the research center from the menu list so that the cellular phone 10 calls automatically and connects to the research center (i.e., the center device 20). The research center may be run by the cellular phone company itself or other. The caller pays a communication charge to the cellular phone company and the communication charge can be interpreted as an information providing charge.

When the cellular phone 10 connects to the research center, the main control portion 22 determines whether the cellular phone 10 is registered in the center device 20 or not according to data relating to an identification number unique to the cellular phone 10 transmitted from the cellular phone 10 connected to the center device 20 and the information relating to the owner of the cellular phone 10 stored in the external storage 23. When the cellular phone 10 is registered in the center device 20, a message of "Please input your password registered in the research center." is transmitted to the cellular phone 10. It is required to input the password for identifying an individual and for improving reliability of the market research. When the cellular phone 10 is not registered in the center device 20, it may be not required to input the password and it is refused to answer the market research.

It may be required to input the password without determining whether the cellular phone 10 is registered in the center device 20 or not. When the answerer is identified by the password, reliability of the result of the market research is insured.

When the password is input correctly, research contents such as "① ⓞ automaker", "② ◇◇ beer brewery" and the like are displayed on the display 11c (S4). The center device 20 selects the information relating to a market research suitable for the owner of the cellular phone 10 according to the information relating to a market research, which can be answered, and the information relating to the owner of the cellular phone 10 and displays it as the research contents on the display 11c.

When the password is not input correctly, it is preferable that the center device 20 refuses the answer to the market research. As a consequence, reliability of the market research is improved.

The owner of the cellular phone 10 (i.e., an answerer) selects "① ⓞ automaker" from the displayed research contents. A message of "① Please select a color you think it suits the image of ⓞ automaker from the following colors and input the color." (and the like) is displayed on the display 11c (S5). The answerer answers questions relating to the market research and transmitted from the center device 20.

When the answerer has finished answering all questions relating to the market research from the center device 20, messages of "Thanks for answering.", "Additional CV points at this time 500 P" and "A cumulative total of CV points 1500 P" is displayed on the display 11c. The center device 20 provides the answerer with an electronified value. The amount of the electronified value provided for the answerer is set at a sufficient amount for increasing an incentive of the answerer (the amount may be changed according to the item of the market research).

The market research continues until a set period of time has finished or answers of a set number have been obtained. Statistical analysis or the like is performed on the result of the market research.

### Providing and using the electronified value

An example of providing and using the electronified value will be described with referring to Fig. 6. The amount of the electronified value corresponds to CV points in Fig. 5.

The amount of the electronified value has economic value and it is generated by the center device 20. An ATM 25 is charged with the generated electronified value, for example, via a leased line. The ATM 25 is provided on busy streets as appropriate. The answerer who has answered to the market research is provided with an amount of the electronified value predetermined according to question contents (answer) of the market research. The answerer is provided with an IC card 15 in advance. The answerer can withdraw the provided electronified value from the ATM 25. The IC card 15 is charged with the electronified value withdrawn. At withdrawing the electronified value from the ATM 25, the answerer inputs a personal identification number or the like to be identified.

The answerer can do shopping at a store or the like 40 by the IC card 15 in which the electronified value is stored. An account of buying and selling at the store or the like 40 is settled using the electronified value stored in the IC card 15. A read/write device for the IC card 15 is provided at the store or the like 40 corresponding to the IC card 15. After purchase of a commodity, an electronified value according to a price of the commodity has been deducted from the electronified value stored in the IC card 15. On the other hand, a usage condition or the like of the electronified value used by the IC card 15 or the like is stored in the read/write device of the store or the like 40.

The store or the like 40 requires the center device 20 to settle in accordance with the usage condition of the electronified value.

The above-described communication market research system of the second aspect of the present invention is not limited to the above-described embodiment and can be changed and carried out as appropriate in the scope in which the object of the present invention is attained and the effect of the present invention is produced.

As for the communication terminal, a cellular phone and a personal handyphone system is excellent from the viewpoint of mobility, however, the communication terminal is not limited to a cellular phone and a personal handyphone system. The information communication system includes the Internet, a communication system, which is run by a corporation for using in-house, a communication system, which is run by a municipality independently, and the like. The information communication system in which the sponsor can receive an information providing charge includes a home page on the Internet at cost. The electronified value (or IC card) is not limited to the SVC described above or the like. Moreover, the second aspect of the present invention can be used in concert with the first aspect of the present invention.

### INDUSTRIAL APPLICABILITY

According to the communication prize contest system of the first aspect of the present invention, the entrant can know immediately the result of whether the entrant wins a prize or not and enter the prize contest repeatedly. Moreover, the connect time of the terminal device to the center device can be increased. Furthermore, an entrant (or a person planning on entering the prize contest) access the required information easily, therefore, the number of entrants are increased.

According to the communication market research system of the second aspect of the present invention, a market research carried out via a communication means, however, the result thereof is obtained with high reliability. Moreover, the answerer (a person planning on answering the market research) access the required information easily, therefore, the number of answerers are increased.

## Claims

1. A communication prize contest system, which is an information communication system in which a part of a communication charge paid by a caller to an information communication network running company is paid to a receiver in an information communication network and/or an information communication system in which an information transmitter who is the receiver can receive an information providing charge from an information receiver who is the caller in said information communication network, comprising:
a terminal device;
a center device; and
said information communication network;
said terminal device comprising at least a data input/output portion and a communication portion in which said terminal device is operated by an entrant who is the caller to connect said terminal device to said center device via said information communication network and enter a prize contest sponsored by a sponsor who is the receiver;
said center device comprising at least a main control portion and a communication portion in which said center device determines on the spot whether the entrant wins a prize or not with respect to an entry from said terminal device and replies immediately the result of whether the entrant wins a prize or not via said information communication network to notify the entrant of the result.

2. The system of claim 1, wherein
said main control portion generates a random number of a predetermined number of digits and the entrant is determined to win a prize when the random number matches a predetermined number and determined to lose a prize when the random number does not match the predetermined number and/or
the entrant may input an arbitrary mark of a predetermined number of digits from said data input/output portion of said terminal device to transmit said center device and the entrant is determined to win a prize when the arbitrary mark matches a predetermined mark and determined to lose a prize when the arbitrary mark does not match the predetermined mark.

3. The system of claim 1, wherein when said terminal device or the entrant is registered in said center device in advance, the probability of winning a prize is increased.

4. The system of claim 1, wherein the prize contest is carried out through a medium of a commodity transmitted at cost or no cost or a medium of electronic information existing on said information communication network and provided at cost or no cost.

5. The system of claim 1, wherein only a person who has input a specified password can enter the prize contest, and the password is entered in a commodity transmitted at cost or no cost or published in electronic information existing on said information communication network and distributed at cost or no cost.

6. The system of claim 1, wherein said center device has a database in which prize contest information relating to the prize contest which can be entered at least at present is stored, and said center device replies information in accordance with an inquiry from a person planning on entering the prize contest via said terminal device among the prize contest information to said terminal device.

7. A communication market research system, which is an information communication system in which a part of a communication charge paid by a caller to an information communication network running company is paid to a receiver in an information communication network and/or in an information communication system in which an information transmitter who is the receiver can receive an information providing charge from an information receiver who is the caller in an information communication network, comprising:
a terminal device;
a center device; and
said information communication network;
said terminal device comprising at least a data input/output portion and a communication portion in which said terminal device is operated by an answerer who is the caller to connect said terminal device to said center device via said information communication network and answer a market research carried out by a sponsor who is the receiver;
said center device comprising at least a main control portion and a communication portion in which said center device records an answer to the market research from said terminal device and provides the answerer with a predetermined amount of an electronified value in accordance with contents of the market research.

8. The system of claim 7, wherein business transaction can be conducted by the electronified value.

9. The system of claim 7, wherein only when said terminal device or the answerer is registered in said center device in advance, an answer to the market research is accepted or the answerer is provided with an electronified value.

10. The system of claim 7, wherein
said terminal device transmits information unique to said terminal device connected to said center device,
said center device receiving the transmitted information unique to said terminal device in which at least information relating to the market research which can be answered at present and information relating to the owner of said terminal device is stored as database in said center device, and
an owner of said terminal device being determined according to the received information unique to said terminal device and the information relating to the owner of said terminal device, wherein information in accordance with the determined owner of said terminal device is selected from the information relating to the market research, which can be answered at present, to transmit to said terminal device.

11. The system of claim 1 or 7, wherein said terminal device is a cellular phone or a personal handyphone system, which is portable.

12. The terminal device used in the communication prize contest system of any of the preceding claims.
